# EUROPÄISCHE PATENTANMELDUNG

(11) **EP 2 811 178 A1**
(43) Veröffentlichungstag der Anmeldung: **10.12.2014**
(21) Anmeldenummer: 14401070.9
(22) Anmeldetag: 02.06.2014
(51) Int. Cl.: F16B 13/12

(54) **Spreizdübel mit Schraube**

(30) Priorität: 07.06.2013 DE 102013105902
(71) Anmelder: Fischer, Artur, 72178 Waldachtal (DE)
(72) Erfinder: Fischer, Artur, 72178 Waldachtal (DE)

(57) **Zusammenfassung**

Die Erfindung betrifft einen Spreizdübel und eine Schraube (8) aus Kunststoff. Die Schraube (8) weist einen bis zu einem vorderen Ende durchgehend zylindrischen Gewindekern (13) auf, der mit einer umlaufenden 90°-Kante (14) in eine vordere Stirnfläche (15) der Schraube (8) übergeht. Die Schraube (8) weist also weder eine Fase noch eine Spitze auf, so dass sie bündig mit einem vorderen Ende des Spreizdübels abschließt und den Spreizdübel trotzdem bis zu dessen vorderem Ende aufspreizt.

## Beschreibung

Die Erfindung betrifft einen hülsenförmigen Spreizdübel mit einer Schraube, die zum Aufspreizen des Spreizdübels in diesen einschraubbar ist.

Die Offenlegungsschrift DE 10 2009 009 422 A1 offenbart einen derartigen Spreizdübel aus Kunststoff mit einer aus Metall bestehenden Schraube. Der bekannte Spreizdübel ist hülsenförmig und weist ein in Längsrichtung durchgehendes und durchmessergestuftes Durchgangsloch auf, das ein Schraubenloch zum Einschrauben der Schraube bildet. Über ungefähr ¾ seiner Länge weist der bekannte Spreizdübel Längsschlitze auf, die ihn in Spreizzungen unterteilen. Das Schraubenloch weist an einem hinteren Ende des Spreizdübels, durch das die Schraube in den Spreizdübel eingebracht wird, einen Durchmesser auf, der einem Gewindedurchmesser eines Gewindes der Schraube entspricht. An zwei bis drei Ringstufen verjüngt sich das Schraubenloch zu einem vorderen Ende des Spreizdübels hin, so dass durch Eindrehen der Schraube die Spreizschenkel auseinandergedrückt, d.h. der Spreizdübel aufgespreizt wird. Die Schraube des bekannten Spreizdübels weist eine Schraubenspitze an ihrem vorderen Ende auf, das durch das hintere Ende in den Spreizdübel eingebracht wird.

Aufgabe der Erfindung ist einen Spreizdübel mit verkürzter Schraube vorzuschlagen.

Diese Aufgabe wird erfindungsgemäß durch einen Spreizdübel und eine Schraube gelöst, die keine Schraubenspitze, sondern eine radiale vordere Stirnfläche aufweist, die mit einer umlaufenden 90°-Kante in einen Gewindekern eines Schraubengewindes der Schraube übergeht. Die Erfindung ermöglicht ein Aufspreizen des Spreizdübels bis an sein vorderes Ende ohne dass die Schraube aus dem vorderen Ende des Spreizdübels vorsteht. Weil sich das vordere Ende am tiefsten unter einer Oberfläche eines Ankergrundes, in dem der Spreizdübel verankert ist, befindet, trägt er am meisten zur Verankerung bei. Allerdings schließt die Erfindung nicht aus, dass das vordere Ende der Schraube aus dem vorderen Ende des Spreizdübels vorsteht oder die Schraube nicht bis zum vorderen Ende des Spreizdübels reicht. Überraschend hat sich gezeigt, dass sich die Schraube mit der umlaufenden 90°-Kante am vorderen Ende so gut in einen Spreizdübel einschrauben lässt wie eine Schraube mit einer Schraubenspitze oder einer Fase am vorderen Ende. Auch an Durchmesserstufen im Innern des Spreizdübels, an denen sich ein Schraubenloch verjüngt, tritt die umlaufende 90°-Kante am vorderen Ende der Schraube problemlos vorbei, ein Unterschied zu einer Schraube mit einer Schraubenspitze oder einer Fase ist nicht feststellbar.

Gemäß Anspruch 2 weist die Schraube jedenfalls an ihrem vorderen Ende einen zylindrischen Gewindekern auf, der über die umlaufende 90°-Kante in die radiale vordere Stirnfläche übergeht. Dieser Anspruch stellt klar, dass die Schraube weder eine Spitze noch eine Fase oder dgl. aufweist.

Die Schraube weist ein vorzugsweise niedriges Gewinde mit einer Gewindehöhe von etwa 3/10 mm auf. Das niedrige Gewinde schneidet sich wenig in den Spreizdübel ein, so dass der Spreizdübel nur wenig geschwächt wird. Außerdem ergibt die niedrige Gewindehöhe einen großen Kerndurchmesser des Schraubengewindes, die Schraube weist eine hohe Bruchfestigkeit auf. Das ist insbesondere bei einer aus Kunststoff bestehenden Schraube von Vorteil. Zudem erhöht ein großer Kerndurchmesser des Schraubengewindes die Spreizwirkung.

Eine bevorzugte Ausgestaltung der Erfindung sieht vor, dass sich das Schraubenloch im Spreizdübel von hinten nach vorn mit Durchmesserstufen verjüngt. Dadurch wird der Spreizdübel mit zunehmender Tiefe unter einer Oberfläche eines Ankergrunds stärker aufgespreizt. Die Durchmesserverjüngung an einer Stufe beträgt zwischen etwa einer Gewindehöhe der Schraube bis zum etwa 2,5-fachen der Gewindehöhe. In absoluten Zahlen beträgt die Durchmesserverjüngung des Schraubenlochs an einer Stufe zwischen etwa 4/10 mm bis 7/10 mm. Zu berücksichtigen ist, dass die Gewindehöhe ein Radius bzw. eine Radiendifferenz und die Verjüngung des Schraubenlochs im Spreizdübel an den Durchmesserstufen ein Durchmesser bzw. eine Durchmesserdifferenz ist.

Die Erfindung ist insbesondere für Spreizdübel und/oder Schrauben aus Kunststoff vorgesehen. Zum UV-Schutz sieht eine bevorzugte Weiterbildung vor, dass der Kunststoff zumindest der Schraube Ruß aufweist. Es genügt, wenn ein hinteres Ende der Schraube, beispielsweise ein Schraubenkopf, Ruß aufweist. Ein Schraubenschaft und der Spreizdübel sind normalerweise nicht der Sonne ausgesetzt. Der Ruß stabilisiert die Schraube gegen UV-bedingte Alterung, so dass Außenanwendungen möglich sind.

Maßangaben sind als ungefähre Werte zu verstehen. Die Erfindung muss nicht exakt die angegebenen Maße aufweisen, sondern Abweichungen sind möglich.

Die Erfindung wird nachfolgend anhand eines in der Zeichnung dargestellten Ausführungsbeispiels näher erläutert. Es zeigen:
- Figur 1: einen erfindungsgemäßen Spreizdübel in perspektivischer Darstellung;
- Figur 2: den Spreizdübel aus Figur 1 in perspektivischer Darstellung mit entgegengesetzter Blickrichtung;
- Figur 3: einen Achsschnitt des Spreizdübels aus Figuren 1 und 2; und
- Figur 4: eine dem Spreizdübel aus Figuren 1 bis 3 zugeordnete Schraube gemäß der Erfindung in Ansicht.

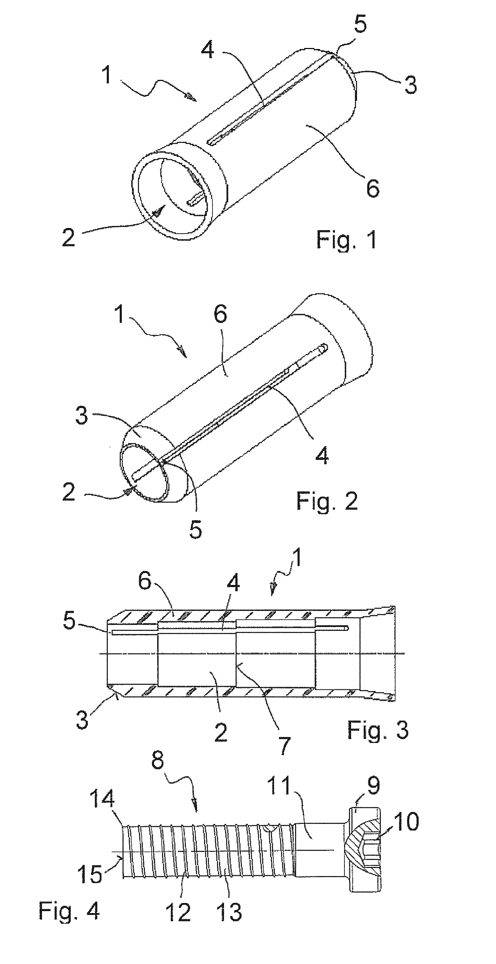

Der in Figuren 1 bis 3 gezeichnete erfindungsgemäße Spreizdübel 1 ist hülsenförmig und weist ein axial durchgehendes Schraubenloch 2 auf. Außen ist der Spreizdübel 1 über fast seine gesamte Länge zylindrisch, an einem hier als vorderen bezeichneten Ende weist er eine 60°-Fase 3 auf und an einem gegenüberliegenden, hier als hinteren bezeichneten Ende weitet er sich etwas kegelförmig mit einem Kegelwinkel von etwa 15° auf. Der Spreizdübel 1 weist zwei Längsschlitze 4 auf, die sich über den größten Teil seiner Länge erstrecken. Vorn Enden die Längsschlitze 4 kurz vor dem vorderen Ende des Spreizdübels 1 unter Belassung einer schwachen Solltrennstelle 5, die beim Aufspreizen reißt. Hinten enden die Längsschlitze 4 vor dem kegelförmigen Ende des Spreizdübels 1. Die Längsschlitze 4 teilen den Spreizdübel 1 in zwei halbzylinderschalenförmige Spreizzungen 6. Die Anzahl von zwei Längsschlitzen 4 und zwei Spreizzungen 6 ist nicht zwingend für die Erfindung.

Das Schraubenloch 2 verjüngt sich von hinten nach vorn mit Durchmesserstufen 7, wobei jede Durchmesserstufe 7 das Schraubenloch 2 um zwischen 4/10 mm bis 7/10 mm verjüngt. Im Ausführungsbeispiel ist der Spreizdübel 1 für eine Schraube mit einem Gewindedurchmesser von 10 mm vorgesehen und es weist bei einem Außendurchmesser des Spreizdübels 1 von 12 mm das Schraubenloch 2 am hinteren Ende einen Durchmesser von 10,1 mm und nach jeweils einer Durchmesserstufe 7 Innendurchmesser von 9,4 mm, 9,0 mm und 8,4 mm auf. Am hinteren Ende ist das Schraubenloch 2 also so groß wie der Gewindedurchmesser der Schraube oder 1/10 mm größer. Nach der ersten Durchmesserstufe 7 ist ein Durchmesser des Schraubenlochs 2 wenige 1/10 mm kleiner als der Gewindedurchmesser der Schraube und wird an jeder Durchmesserstufe 7 kleiner. Beim Einschrauben der Schraube durch das hintere Ende des Spreizdübels 1 wird der Spreizdübel 1 durch die Durchmesserstufungen 7 des Schraubenlochs 2 von hinten nach vorn zunehmend stärker aufgespreizt.

Für eine Schraube mit einem Gewindedurchmesser von 8 mm weist der Spreizdübel 1 einen Außendurchmesser von 10 mm und das Schraubenloch 2 am hinteren Ende einen Durchmesser von 8,1 mm auf, der sich an den Durchmesserstufen 7 auf 7,6 mm, 7,2 mm und 6,8 mm verkleinert. Der Spreizdübel 1 ist gewindelos.

Der erfindungsgemäße Spreizdübel 1 weist die in Figur 4 gezeichnete Spreizschraube 8 auf. Im Ausführungsbeispiel weist die Schraube 8 einen zylindrischen Schraubenkopf 9 mit einem Innenstern (Torx) als Werkzeugsitz 10 zu einem durch Formschluss drehfesten Ansetzen eines nicht dargestellten Drehwerkzeugs zum Drehantrieb der Schraube 8 auf. Weder die Form des Schraubenkopfs 9 noch des Werkzeugsitz 10 sind zwingend für die Erfindung und auch ein kopfloser Gewindebolzen anstelle der Schraube 8 ist nicht ausgeschlossen.

Im Anschluss an den Schraubenkopf 9 weist die Schraube 8 einen kurzen, gewindelosen Schaftabschnitt 11 auf, an den sich ein Schraubengewinde 12 anschließt. Das Schraubengewinde 12 hat eine Höhe von 3/10 mm, ein Durchmesserunterschied zwischen einem Gewindekern 13 und dem Schraubengewinde 12 beträgt also 6/10 mm. Die Gewindehöhe ist klein, so dass sich das Schraubengewinde 12 beim Einschrauben in den Spreizdübel 1 nur wenig einschneidet oder eindrückt und eine Wandung des Spreizdübels 1 nur wenig schwächt. Die Gewindehöhe von 3/10 mm gilt für beide Gewindedurchmesser von 10 mm und 8 mm. Der Gewindekern 13 ist durchgehend bis zu einem dem Schraubenkopf 9 fernen vorderen Ende der Schraube 8 zylindrisch, am vorderen Ende geht der Gewindekern 13 mit einer umlaufenden 90°-Kante 14 in eine radiale vordere Stirnfläche 15 über. Die Schraube 8 gemäß der Erfindung weist weder eine Fase oder dgl. noch eine Spitze an ihrem vorderen Ende auf. Trotz der umlaufenden 90°-Kante 14 am vorderen Ende lässt sich die Schraube 8 problemlos in den Spreizdübel 1 einschrauben, die umlaufende 90°-Kante 14 der Schraube 8 überwindet die Durchmesserstufen 7, mit denen sich das Schraubenloch 2 des Dübels 1 verjüngt, problemlos. Die Schraube 8 lässt sich mit ihrem vorderen Ende bündig oder nahezu bündig, d. h. mit kurzem Überstand oder Rücksprung zum vorderen Ende des Spreizdübels 1 in den Spreizdübel 1 einschrauben. Die Schraube 8 steht dadurch nicht oder allenfalls wenig vorn aus dem Spreizdübel 1 vor, so dass ein Bohrloch zur Verankerung des Spreizdübels 1 nicht oder kaum tiefer sein muss als der Spreizdübel 1 lang ist. Durch den bis vorn zylindrischen Gewindekern 13 spreizt die Schraube 8 den Spreizdübel 1 bis zu dessen vorderem Ende. Eine Länge der Schraube 8 ist so bemessen, dass ihr vorderes Ende bündig oder nahezu bündig mit dem vorderen Ende des Spreizdübels 1, wenn die Schraube 8 in den Spreizdübel 1 eingeschraubt ist.

Der Durchmesser des Gewindekerns 13 der Schraube 8 ist in etwa so groß wie der Durchmesser des Schraubenlochs 2 im Spreizdübel 1 nach der ersten Durchmesserstufe 7, so dass der Spreizdübel 1 nach der ersten Durchmesserstufe 7 nicht vom Gewindekern 13, sondern nur vom Schraubengewinde 12 aufgespreizt wird. Die Aufspreizung des Spreizdübels 1 ist deswegen nach der ersten Durchmesserstufe 7 gering, so dass sich die Schraube 8 leichtgängig einschrauben lässt und der Spreizdübel 1 nicht mitdreht. An den weiteren Durchmesserstufen 7 vergrößert sich die Aufspreizung des Spreizdübels 1 aufgrund des abnehmenden Durchmessers des Schraubenlochs 2, der Spreizdübel 1 wird ab der zweiten Durchmesserstufe 7 vom Gewindekern 13 der Schraube 8 aufgespreizt.

Der Spreizdübel 1 und die Schraube 8 bestehen aus Kunststoff, beispielsweise aus Polyamid und vorzugsweise aus faserverstärktem Kunststoff. Dem Kunststoff der Schraube 8 ist Ruß zugesetzt, der Ruß ist im Kunststoff dispergiert. Durch den Ruß ist die Schraube 8 gegen UV-bedingte Alterung stabilisiert.

## Patentansprüche

1. Spreizdübel mit Schraube, wobei der Spreizdübel (1) hülsenförmig ist und ein in einer Längsrichtung verlaufendes Schraubenloch (2) zum Einschrauben der Schraube (8) aufweist, **dadurch gekennzeichnet, dass** die Schraube (8) eine radiale vordere Stirnfläche (15) aufweist, die mit einer umlaufenden 90°-Kante (14) in einen Gewindekern (13) eines Schraubengewindes (12) der Schraube (8) übergeht.

2. Spreizdübel nach Anspruch 1, **dadurch gekennzeichnet, dass** der Gewindekern im Anschluss an die umlaufende 90°-Kante (14) zylindrisch ist.

3. Spreizdübel nach Anspruch 1 oder 2, **dadurch gekennzeichnet, dass** das Schraubengewinde (12) der Schraube (8) eine Gewindehöhe von etwa 3/10 mm aufweist.

4. Spreizdübel nach einem der Ansprüche 1 bis 3, **dadurch gekennzeichnet, dass** das Schraubenloch (2) im Spreizdübel (1) sich von hinten nach vorn mit Durchmesserstufen (7) verjüngt, die zwischen etwa einer Gewindehöhe des Schraubengewindes (12) der Schraube (8) und dem 2,5-fachen der Gewindehöhe groß sind.

5. Spreizdübel nach einem der Ansprüche 1 bis 3, **dadurch gekennzeichnet, dass** das Schraubenloch (2) im Spreizdübel (1) sich von hinten nach vorn mit Durchmesserstufen (7) verjüngt, die zwischen etwa 4/10 mm bis 7/10 mm groß sind.

6. Spreizdübel nach einem der vorhergehenden Ansprüche, **dadurch gekennzeichnet, dass** der Spreizdübel (1) und/oder die Schraube (8) aus Kunststoff bestehen.

7. Spreizdübel nach Anspruch 6, **dadurch gekennzeichnet, dass** der Kunststoff der Schraube (8) Ruß aufweist.
